# EUROPEAN PATENT SPECIFICATION

(11) **EP 4 060 079 B1**
(45) Date of publication and mention of the grant of the patent: **27.09.2023**
(21) Application number: 21802584.9
(22) Date of filing: 04.06.2021
(51) Int. Cl.: C23F 1/00, C23F 1/08, C23F 1/28, C23F 1/02, C22B 7/00, C22B 3/00, C22B 3/02, E21B 10/567, B22F 3/24

(54) **SEALED COBALT LEACHING DEVICE, REAGENT FOR COBALT LEACHING, METHOD USING DEVICE, USE OF METHOD**
VERSIEGELTE KOBALTAUSLAUGUNGSVORRICHTUNG, REAGENZ ZUR KOBALTAUSLAUGUNG, VERFAHREN UNTER VERWENDUNG DER VORRICHTUNG, ANWENDUNG DES VERFAHRENS
DISPOSITIF ÉTANCHE DE LIXIVIATION DU COBALT, RÉACTIF POUR LA LIXIVIATION DU COBALT, MÉTHODE UTILISANT LE DISPOSITIF, UTILISATION DE LA MÉTHODE

(30) Priority: 22.01.2021 CN 202110086761
(43) Date of publication of application: 21.09.2022
(73) Proprietor: Sichuan Jiarui Technology Co., Ltd., Sichuan 611900 (CN)
(72) Inventor: ZHENG, Yu, Chongqing 400000 (CN); LIU, Nian, Jiangsu 215000 (CN); CAO, Lijuan, Langfang, Hebei 065200 (CN); LI, Weiming, Xianning, Hubei 437324 (CN)
(74) Representative: Meyer, Thorsten
(86) International application number: PCT/CN2021/098389
(87) International publication number: WO 2022/156118

(56) References cited:
- WO-A1-2015/059196
- CN-A- 107 916 896
- CN-A- 109 179 396
- CN-A- 110 565 094
- CN-A- 110 565 094
- CN-A- 110 656 333
- CN-A- 111 963 064
- US-A1- 2007 169 419
- US-A1- 2010 095 602
- US-A1- 2012 227 332
- US-B1- 9 227 302
- US-B1- 10 173 899

## Description

### TECHNICAL FIELD

The present disclosure relates to the field of leaching of cobalt, and in particular to a sealed cobalt leaching device, a reagent for the cobalt leaching, a method using the device, and use of the method.

### BACKGROUND

As a key working component for crude oil and natural gas exploitation and as a material that directly interacts with a rock structure for shearing and crushing, a polycrystalline diamond (PCD) composite material plays a decisive role in the drilling efficiency of the overall drill bit. Due to the extreme properties of underground drilling conditions, a PCD composite layer needs to have the optimal material properties to achieve exploitation tasks, including extremely high hardness, toughness, and thermal stability. The arrangement of carbon atoms in the diamond itself provides a PCD composite layer with ultra-high hardness; a micro-grain boundary of polycrystalline bonding and a network structure of a metal catalyst existing among micro-scale grains provide a PCD composite layer with necessary toughness; with the continuous improvement of drilling technology and equipment level, a rotational speed of a drill bit, and a pressure at a tip of a drill bit, unprecedented requirements are put forward for the thermal stability of a PCD composite layer that is in direct contact with a rock surface and works at a high pressure and high speed. In a high-temperature and high-pressure synthesis process of a PCD composite material, transition metals of the group VIII elements are usually used as catalysts to reduce a temperature and a pressure required for the formation of a diamond crystal phase, so as to achieve an engineering technical index level that can be achieved by the prior pressing machine, thus completing the entire synthesis process. However, a transition metal element penetrated into a PCD material will cause local stress concentration in actual drilling applications due to the different coefficient of thermal expansion (CTE) thereof from a diamond body and has phase transition catalysis properties itself, when a temperature reaches 700°C under normal pressure, a diamond phase will be catalytically converted into a graphite phase that is more stable under normal pressure, which will seriously reduce the thermal stability of the PCD composite material.

WO0224601A1 has disclosed that a PCD composite material is subjected to surface treatment by chemical method to dissolve and precipitate metal elements in the material and improve the overall thermal stability of the PCD composite material.

With the above-mentioned continuous improvement of drilling technology and performance requirements, requirements on the hardness, toughness, and thermal stability of a diamond composite layer in the entire industry have also increased significantly. Polycrystalline diamond compact (PDC) manufacturers improve the process conditions of a high-temperature and high-pressure synthesis process to improve the hardness and toughness of a composite layer and greatly improve a microstructure of the composite layer and the overall compactness of microcrystalline grains, such that a catalytic metal phase remaining in a diamond composite layer during the high-temperature and high-pressure synthesis process has finer pore spaces and thus makes it more difficult to be contacted by a chemical reagent used to leach the metal phase, resulting in more difficult to achieve the required thermal stability than before. The significant increase in the time required for this critical treatment process poses tremendous pressure on a production cycle of a PDC manufacturer and a drill bit manufacturer to manufacture an end product. While improving the dissolution and leaching of a metal phase in a diamond composite layer by a chemical reagent, how to protect a hard alloy substrate under the composite layer has become an important technical task to improve the overall efficiency and safety. The market is in urgent need of a mature and stable technology that can adapt to demanding chemical corrosion conditions to meet production requirements.

Patent application US10173899B1 disclosed a method of fabricating a leached polycrystalline diamond ( "PCD" ) body. The PCD body includes bonded diamond grains defining interstitial regions at least a portion of which include at least one interstitial constituent disposed therein. The method includes leaching the PCD body with a leaching agent to remove at least a portion of the at least one interstitial constituent therefrom. The leaching agent includes a mixture having hydrofluoric acid in a first concentration of about 10 weight % to about 50 weight %, nitric acid in a second concentration of about 5 weight % to about 25 weight %, and water in a third concentration of about 25 weight % to about 85 weight %.

Patent application CN110565094A disclosed a cobalt removing device for a diamond compact, which belongs to the technical field of compact processing devices and comprises the following components: the device can play the guard action to the carbide base member when the piece cobalt is taken off to the diamond, and can effectively dispel the heat, guarantees device used repeatedly.

Patent application US2010095602A1 disclosed a method for making a thermally stable cutting element may include forming an acid mixture containing two different acid species by combining an acid solution and at least one acid-forming compound, wherein the at least one acid-forming compound is provided in solid form, and wherein the at least one acid-forming compound produces an acid that is different than the acid solution; treating at least a portion of a sintered diamond body by placing the sintered diamond body in the acid mixture, wherein the sintered diamond body comprises: a matrix phase of bonded-together diamond grains; a plurality of interstitial regions dispersed within the matrix phase; and a metal material disposed within a plurality of the interstitial regions; wherein the treating removes the metal material from at least a portion of the plurality of interstitial regions; and removing the sintered diamond body from the acid mixture after a predetermined length of time, wherein at least a portion of the diamond body removed from the acid mixture is substantially free of the metal material and is a thermally stable diamond body.

Patent application CN107916896A disclosed a kind of diamond compact takes off cobalt protective device, including fixing sleeve, pressing sleeve, rubber ring and fixed column, cavity is carried in fixing sleeve, the side ring week of the fixing sleeve is equipped with chuck, the pressing sleeve be placed in in the cavity, and coordinate with the inner wall of fixing sleeve, the rubber ring is installed between the chuck and the pressing sleeve, band is useful for placing the storage tank of composite sheet on pressing sleeve, the bottom of the fixed column withstands on the dorsal part of the pressing sleeve, and fixed column is threaded in the opposite side of the fixing sleeve.Using this protective case, in the de- cobalt liquid of special formula, on the premise of taking off cobalt depth more than 0.6mm, design protection can complete technological requirement.

Patent application US2012227332A1 disclosed a system for producing thermally stable cutting elements may include a heat source, a pressure vessel, at least one polycrystalline diamond body attached to a carbide substrate, and a leaching agent is disclosed, wherein the heat source includes a container comprising at least one receiving mechanism and at least one retention mechanism, and wherein the carbide substrate is disposed in the at least one receiving mechanism of the pressure vessel, and wherein the leaching agent is disposed in the pressure vessel, and wherein the leaching agent removes the catalyzing material from the interstitial spaces interposed between the diamond particles of the at least one polycrystalline diamond body, and wherein the at least one retention mechanism of the pressure vessel seals at least a portion of the carbide substrate into the at least one receiving mechanism and prevents the leaching agent from contacting at least a portion of the carbide substrate.

### SUMMARY

In order to solve the above-mentioned problems, the present disclosure provides a sealed cobalt leaching device, and a method using the device.

According to a first aspect of the present invention, a sealed cobalt leaching device is provided, including a base 1, where a top of the base 1 is provided with a first groove 5, a chemical solution holding tool 2 is provided above the base 1, a bottom of the chemical solution holding tool 2 is removably connected to the base 1, a holding through-hole 10 penetrating up and down is formed inside the chemical solution holding tool 2, and a sealing cover 3 is provided above the chemical solution holding too 2.

Through the combination of the base, the chemical solution holding tool, and the sealing cover, the holding through-hole inside the chemical solution holding tool is sealed. Moreover, a PDC is placed in the first groove, such that only a diamond layer of the PDC is in contact with a cobalt leaching reagent, thereby effectively protecting a metal alloy substrate.

Further, a first circular groove 4 is formed downwards at the top of the base 1, the first groove 5 is provided at a bottom surface of the first circular groove 4, and the bottom of the chemical solution holding tool 2 is connected to the first circular groove 4 through a thread, a clamping groove, a hinge, or an external fixture, and preferably through the thread.

The bottom of the chemical solution holding tool may be connected to the first circular groove through the thread to further improve sealing performance of a connection at the bottom of the chemical solution holding tool.

Further, a second circular groove may be formed upwards at a bottom of the sealing cover; and the sealing cover and the chemical solution holding tool may be connected through a thread, a clamping groove, a hinge, or an external fixture, and preferably through the thread.

The sealing cover and the chemical solution holding tool may be connected through the thread to further improve the sealing performance of a connection at the top of the chemical solution holding tool.

Further, a second circular groove may be formed upwards at a bottom of the sealing cover; and the second circular groove may be connected to an outer peripheral side of the base through a thread, a clamping groove, a hinge, or an external fixture, and preferably through the thread.

The sealing cover and the base may be directly connected through the thread, and when tightening the thread, the sealing cover and the base will squeeze the chemical solution holding tool from the top and the bottom respectively to achieve a prominent sealing effect.

Further, a sealing gasket may be provided between the chemical solution holding tool and the sealing cover; a bottom surface of the sealing gasket may be provided with a sealing bump; the sealing bump and the holding through-hole may be in an interference fit; and a tapered chamfer may be formed at a top of the holding through-hole.

The sealing gasket and the sealing bump that is in interference fit with the holding through-hole can further improve the sealing performance at the top of the chemical solution holding tool, and the tapered chamfer at the top of the holding through-hole facilitates the process that the sealing bump slides into the holding through-hole when the sealing cover is tightened.

Further, a stepped groove may be formed around the first groove on the bottom surface of the first circular groove; a bottom surface of the stepped groove may be provided with a tapered slope, and an included angle between the tapered slope and a vertical direction may be 0° to 45°; a bottom surface of the chemical solution holding tool may be provided with a protruding pressing block; a sealing element may be provided inside the stepped groove; and a height of the stepped groove may be less than or equal to a sum of a height of the sealing element and a height of the protruding pressing block at the bottom of the chemical solution holding tool.

When the chemical solution holding tool is tightened, the pressing block squeezes the sealing element downwards to give the sealing element a downward force. Moreover, because the bottom surface of the stepped groove is a tapered slope, the tapered slope will also give the sealing element an oblique upward force. A combined force of these two forces will push the sealing element towards a center, such that the sealing element is close to a PDC to achieve a prominent sealing effect.

Further, a liquid inlet and a liquid outlet may be formed on a side wall of the chemical solution holding tool; the liquid inlet may be formed on a lower part of an inner side wall of the holding through-hole; and the liquid outlet may be formed on an upper part of the inner side wall of the holding through-hole.

The liquid inlets and liquid outlets of multiple chemical solution holding tools may be connected through liquid-conveying pipes to realize the external recycling of a cobalt leaching reagent, which improves the utilization efficiency of the cobalt leaching reagent and the cobalt leaching efficiency. The cobalt leaching reagent may be injected from the liquid inlet at a lower position and then flow out from the liquid outlet at a higher position, which can reduce a cobalt concentration at a junction between a PDC fixture and the cobalt leaching reagent, thereby improving the mass transfer efficiency and then enhancing the cobalt leaching efficiency.

Further, the base and the sealing cover may be made of an organic material and/or an inorganic material;
the organic material may include one or more from the group consisting of an engineering plastic, a rubber, a fluorine-containing plastic, and a resin; and
the inorganic material may include one or more from the group consisting of a metal, a metal oxide or nitride, a non-metal, and a non-metal oxide or nitride.

Further, the chemical solution holding tool may be made of an organic material and/or an inorganic material;
the organic material may include one or more from the group consisting of an engineering plastic, a fluorine-containing plastic, and a resin; and
the inorganic material may include one or more from the group consisting of a metal, a metal oxide or nitride, a non-metal, and a non-metal oxide or nitride.

Due to the strong corrosivity of the cobalt leaching reagent, the selection of a corrosion-resistant material to fabricate the chemical solution holding tool can increase a life of the fixture.

Further, a material used for the base, the chemical solution holding tool, or the sealing cover may have a Young's modulus of greater than 2.3 GPa.

The modulus value of 2.3 GPa correspond to the strength of the engineering plastic. Based on the strength requirements and costs of different materials, different materials can be selected as raw materials for fabricating the chemical solution holding tool.

Further, an inner wall of the holding through-hole of the chemical solution holding tool may be provided with a corrosion-resistant layer; a material for fabricating the corrosion-resistant layer may include one or more from the group consisting of a fluorine-containing plastic, a resin, a metal and an oxide or nitride thereof, and a non-metal and an oxide or nitride thereof; and the corrosion-resistant layer may be connected to the chemical solution holding tool through a welding, an adhesive connection, a mechanical connection, or a chemical bonding.

Compared with the use of the corrosion-resistant material to fabricate the entire chemical solution holding tool, the combination of a metal alloy substrate and a corrosion-resistant layer has lower cost and better processability.

Further, the sealing gasket and the sealing element may be made of a corrosion-resistant material; and
the corrosion-resistant material may include one or more from the group consisting of a fluororubber, an oxyfluoride rubber, a fluorine-containing plastic, and a fluorine-containing resin.

Further, a CTE of the material of the sealing element or the sealing gasket may be both more than three times a maximum CTE of the material of the base, the chemical solution holding tool, and the sealing cover.

When the sealed cobalt leaching device is heated, in order to improve the sealing performance thereof, materials with large CTE are selected as the material of the sealing gasket and the sealing element, such that when a temperature and a pressure inside the holding through-hole increase, the sealing gasket and the sealing element expand accordingly, thereby improving the sealing performance.

According to a second aspect of the present invention, a cobalt leaching method is provided, including the following steps:
S1. placing the fixture in the first groove, and then placing the sealing element in the stepped groove;
S2. connecting the chemical solution holding tool and the base, and compacting the sealing element;
S3. injecting the cobalt leaching reagent;
S4. placing the sealing gasket at the top of the chemical solution holding tool, and then assembling the sealing cover to compact the sealing gasket;
S5. heating the assembled sealed cobalt leaching device at 50°C to 350°C;
S6. taking out the heated sealed cobalt leaching device, and then cooling it to room temperature;
S7. opening the sealing cover and removing the sealing gasket;
S8. removing the cobalt leaching reagent, and then cleaning an encapsulation layer several times with clean water to remove the residual chemical solution;
S9. removing the chemical solution holding tool and the sealing element, and taking a cobalt-leached fixture out from the first groove; and
S 10. detecting a cobalt leaching depth of the fixture.

The above cobalt leaching method can achieve high-pressure sealing of a cobalt leaching process of the fixture, which can improve a cobalt leaching temperature and cobalt leaching efficiency, and can also prevent an acid in a cobalt leaching reagent from volatilizing, which may result in polluting the environment, and damaging the human body.

Further, the heating in S5 may be conducted at 70°C to 250°C and preferably at 170°C.

Further, a heating method in S5 may include one or more from the group consisting of a water bath, an oil bath, a gas bath, microwave heating, resistance wire heating, oven heating, electromagnetic induction heating, and infrared heating.

Further, in S5, a cobalt leaching time may be adjusted according to a cobalt leaching time-depth curve, such that a thickness of a layer without cobalt leaching remaining in a diamond layer is greater than 300 µm.

The cobalt leaching depth of the diamond layer is controlled. When the thickness of the layer without cobalt leaching remaining in the diamond layer is less than 300 µm, the cobalt leaching reagent has the risk of infiltrating into the metal alloy substrate layer.

Further, in S2, the chemical solution holding tool may be screwed into the base.

Further, in S2, a torque wrench may be used to screw the chemical solution holding tool into the base.

The chemical solution holding tool may be tightened with the torque wrench, such that a screwing degree of the chemical solution holding tool can be adjusted to adjust a deformation degree of the sealing gasket, thereby adjusting an area of a side surface of the PDC exposed to the cobalt leaching reagent to adjust a shape of the cobalt leaching layer.

Further, in S3, the cobalt leaching reagent may be injected into the holding through-hole from the top thereof.

Compared with a method of immersing a PDC downwards in a cobalt leaching reagent, pouring the cobalt leaching reagent on the top of the PDC can stabilize the cobalt leaching process and make an obtained cobalt leaching layer more uniform.

Further, in S3, an injection device may be used to inject the cobalt leaching reagent into the holding through-hole.

Injecting the cobalt leaching reagent through the injection device can prevent the volatilization of the cobalt leaching reagent from affecting the cobalt leaching effect, and can also prevent the cobalt leaching reagent from dripping on the outside of the tool and corroding the tool.

Further, in S8, the cobalt leaching reagent may be removed by overturning the fixture.

Further, in S8, a liquid pump may be used to pump out the cobalt leaching reagent in the holding through-hole.

Compared with the method of overturning the tool, pumping out the cobalt leaching reagent in the holding through-hole can prevent the cobalt leaching reagent from spattering, which may result in polluting the environment, damaging the human body, or corroding the tool.

Further, after S8 and before S9, the cobalt leaching method may further include the following step:
S8.1. cleaning the sealed cobalt leaching device in an ultrasonic cleaning device.

Ultrasonic cleaning can clean away the cobalt leaching reagent in gaps of the sealed cobalt leaching device, and prevent the cobalt leaching reagent from contacting and corroding the metal alloy substrate when the PDC is removed.

Further, after S9 and before S10, the cobalt leaching method may further include the following steps:
S9.1. subjecting the PDC to ultrasonic cleaning.

The ultrasonic cleaning for the PDC can remove the residual cobalt leaching reagent on a diamond skeleton in the cobalt leaching layer.

Further, after S9.1 and before S10, the cobalt leaching method may further include the following step:
S9.2. drying the PDC.

Drying the PDC can allow the residual cobalt leaching reagent on the diamond skeleton to completely volatilize.

Further, after S2 and before S3, the cobalt leaching method may further include the following step:
S2.1. connecting a liquid inlet of one of two adjacent cobalt leaching devices with a liquid outlet of the other one of the two adjacent cobalt leaching devices, and connecting a liquid inlet of the first cobalt leaching device and a liquid outlet of the last cobalt leaching device to an external liquid circulation system, separately.

The liquid inlets and liquid outlets of multiple chemical solution holding tools may be connected through liquid-conveying pipes to realize external recycling of the cobalt leaching reagent, which improves the utilization efficiency of the cobalt leaching reagent and the cobalt leaching efficiency. A cobalt leaching reagent may be injected from a liquid inlet at a lower position and then flow out from a liquid outlet at a higher position, which can reduce a cobalt concentration at a junction between the PDC and the cobalt leaching reagent, thereby improving the mass transfer efficiency and then enhancing the cobalt leaching efficiency.

Further, in S3, an amount of the cobalt leaching reagent may be used of 1/5 to 4/5 of a volume of the holding through-hole.

Because the cobalt leaching reagent includes volatile acid and water, the vaporization of a liquid will cause an internal pressure of the chemical solution holding tool to increase sharply during a heating process. When the amount of the cobalt leaching reagent is more than 4/5 of the volume of the holding through-hole, the remaining 1/5 of the volume is not enough to hold the vaporized cobalt leaching reagent and the internal pressure will exceed a pressure that the sealed cobalt leaching device can withstand, causing the cobalt leaching reagent to overflow or the sealed cobalt leaching device to burst. When the amount of the cobalt leaching reagent is less than 1/5 of the volume of the holding through-hole, the amount of the cobalt leaching reagent is not enough to achieve a target cobalt leaching depth.

For example, a cobalt leaching reagent is provided, including, in parts by mass: 24 to 48 parts of hydrofluoric acid (HF), 24 to 30 parts of nitric acid (HNO₃), and 32 to 40 parts of distilled water (H₂O).

Further, the cobalt leaching reagent may include, in parts by mass: 36 parts of hydrofluoric acid (HF), 27.2 parts of nitric acid (HNO₃), and 36.8 parts of distilled water (H₂O).

The cobalt leaching method described above is used on a PDC.

The present disclosure has the following beneficial effects:
1. Through the combination of the base, the chemical solution holding tool, and the sealing cover, the holding through-hole inside the chemical solution holding tool is sealed. Moreover, the PDC is placed in the first groove, such that only the diamond layer of the PDC is in contact with the cobalt leaching reagent, thereby effectively protecting the metal alloy substrate.
2. The bottom of the chemical solution holding tool may be connected to the first circular groove through the thread to further improve the sealing performance of the connection at the bottom of the chemical solution holding tool.
3. The sealing cover and the chemical solution holding tool may be connected through the thread to further improve the sealing performance of the connection at the top of the chemical solution holding tool.
4. The sealing cover and the base may be directly connected through the thread, and when tightening the thread, the sealing cover and the base will squeeze the chemical solution holding tool from the top and the bottom respectively to achieve a prominent sealing effect.
5. The sealing gasket and the sealing bump that is in interference fit with the holding through-hole can further improve the sealing performance at the top of the chemical solution holding tool, and the tapered chamfer at the top of the holding through-hole facilitates the process that the sealing bump slides into the holding through-hole when the sealing cover is tightened.
6. When the chemical solution holding tool is tightened, the pressing block squeezes the sealing element downwards to give the sealing element a downward force. Moreover, because the bottom surface of the stepped groove is a tapered slope, the tapered slope will also give the sealing element an oblique upward force. A combined force of these two forces will push the sealing element towards a center, such that the sealing element is close to the PDC to achieve a prominent sealing effect.
7. By integrating the sealing gasket and the sealing cover into one fixture, operation steps for disassembling and assembling the fixture are simplified to improve the efficiency.
8. Due to the strong corrosivity of the cobalt leaching reagent, the selection of the corrosion-resistant material to fabricate the chemical solution holding tool can increase the life of the fixture.
9. Compared with the use of the corrosion-resistant material to fabricate the entire chemical solution holding tool, the combination of the metal alloy substrate and the corrosion-resistant layer has lower cost and better processability.
10. When the sealed cobalt leaching device is heated, in order to improve the sealing performance, materials with large CTE are selected as the material of the sealing gasket and the sealing element, such that when the temperature and the pressure inside the holding through-hole increase, the sealing gasket and the sealing element expand accordingly, thereby improving the sealing performance.
11. The above cobalt leaching method can achieve high-pressure sealing of a cobalt leaching process of the PDC, which can improve a cobalt leaching temperature and a cobalt leaching efficiency, and can also prevent an acid in the cobalt leaching reagent from volatilizing, which may result in polluting the environment, and damaging the human body.
12. The cobalt leaching depth of the diamond layer is controlled. When the thickness of the layer without cobalt leaching remaining in the diamond layer is less than 300 µm, the cobalt leaching reagent has the risk of infiltrating into the metal alloy substrate.
13. The chemical solution holding tool may be tightened with the torque wrench, such that the screwing degree of the chemical solution holding tool can be adjusted to adjust the deformation degree of the sealing gasket, thereby adjusting an area of the side surface of the PDC exposed to the cobalt leaching reagent to adjust the shape of the cobalt leaching layer.
14. Injecting the cobalt leaching reagent through the injection device can prevent the volatilization of the cobalt leaching reagent from affecting the cobalt leaching effect, and can also prevent the cobalt leaching reagent from dripping on the outside of the tool and corroding the tool.
15. Compared with the method of overturning the tool, pumping out the cobalt leaching reagent in the holding through-hole can prevent the cobalt leaching reagent from spattering, which may result in polluting the environment, damaging the human body, or corroding the tool.
16. Ultrasonic cleaning can clean away the cobalt leaching reagent in the gaps of the tool, and prevent the cobalt leaching reagent from contacting and corroding the metal alloy substrate when the PDC is removed.
17. The ultrasonic cleaning for the PDC can remove the residual cobalt leaching reagent on the diamond skeleton in the cobalt leaching layer.
18. Drying the PDC can allow the residual cobalt leaching reagent on the diamond skeleton to completely volatilize.
19. Because the cobalt leaching reagent includes a volatile chemical composition and water, the vaporization of the liquid will cause an internal pressure of the chemical solution holding tool to increase sharply during a heating process. When the amount of the cobalt leaching reagent is more than 4/5 of the volume of the holding through-hole, the remaining 1/5 of the volume is not enough to hold the vaporized cobalt leaching reagent and the internal pressure will exceed a pressure that the sealed cobalt leaching device can withstand, causing the cobalt leaching reagent to overflow or the sealed cobalt leaching device to burst. When the amount of the cobalt leaching reagent is less than 1/5 of the volume of the holding through-hole, the amount of the cobalt leaching reagent is not enough to achieve a target cobalt leaching depth.
20. The liquid inlets and liquid outlets of multiple chemical solution holding tools may be connected through liquid-conveying pipes to realize the external recycling of the cobalt leaching reagent, which improves the utilization efficiency of the cobalt leaching reagent and the cobalt leaching efficiency. The cobalt leaching reagent may be injected from a liquid inlet at a lower position and then flow out from a liquid outlet at a higher position, which can reduce the cobalt concentration at a junction between the PDC and the cobalt leaching reagent, thereby improving the mass transfer efficiency and then enhancing the cobalt leaching efficiency.
21. The three modulus values of 2.3 GPa, 50 GPa, and 200 GPa correspond to the strength of the engineering plastic, metal alloy, and metal oxide ceramic, respectively. Based on the strength requirements and costs of different materials, different materials can be selected as raw materials for fabricating the chemical solution holding tool.
22. Compared with a method of immersing the PDC downwards in the cobalt leaching reagent, pouring the cobalt leaching reagent on the top of the PDC can stabilize the cobalt leaching process and make an obtained cobalt leaching layer more uniform.

### BRIEF DESCRIPTION OF THE DRAWINGS

FIG. 1 is a schematic structural diagram of a sealed cobalt leaching device of Example 1;
FIG. 2 is a graph illustrating a relationship between a cobalt leaching depth and a cobalt leaching time;
FIG. 3 shows a cobalt leaching effect of a PDC under X-rays; and
FIG. 4 is a schematic structural diagram of a sealed cobalt leaching device of Example 2.

Reference numerals: base 1; chemical solution holding tool 2; sealing cover 3; first circular groove 4; first groove 5; stepped groove 6; tapered slope 7; protruding pressing block 8; sealing element 9; holding through-hole 10; second circular groove 11; sealing gasket 12; sealing bump 13; tapered chamfer 14; liquid inlet 15; liquid outlet 16; pipe 17; channel 18; cobalt leaching layer 19; layer without cobalt leaching 20; and metal alloy substrate 21.

### DETAILED DESCRIPTION

In order to enable those skilled in the art to better understand the solutions of the present disclosure, the technical solutions in the examples of the present disclosure will be described clearly and completely below in conjunction with the accompanying drawings of the specification of the present disclosure.

### Example 1:

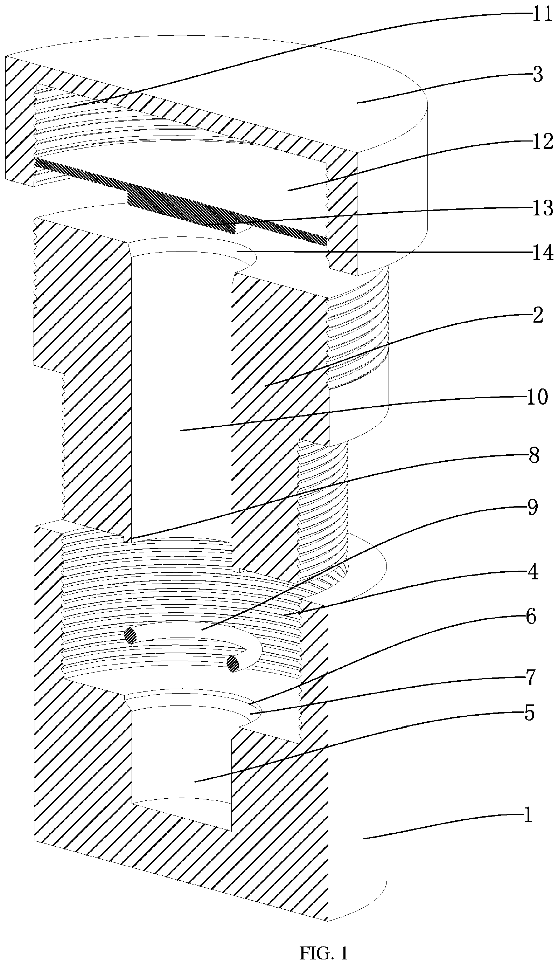

As shown in FIG. 1, a sealed cobalt leaching device is provided, including a base 1, a chemical solution holding tool 2, and a sealing cover 3, where a first circular groove 4 is formed downwards at a top of the base 1; a first groove 5 is formed downwards on a bottom surface of the first circular groove 4; a stepped groove 6 is formed around the first groove 5 on the bottom surface of the first circular groove 4; a tapered slope 7 is provided at a bottom surface of the stepped groove 6, and an included angle between the tapered slope 7 and a vertical direction is 30°; a bottom surface of the chemical solution holding tool 2 is provided with a protruding pressing block 8 that matches with the stepped groove 6; a sealing element 9 is provided inside the stepped groove 6; a height of the stepped groove 6 is smaller than a thickness of the sealing element 9; a bottom of the chemical solution holding tool 2 is threadedly connected to the first circular groove 4; a holding through-hole 10 penetrating up and down is formed inside the chemical solution holding tool 2; the sealing cover 3 is provided above the chemical solution holding tool 2; a second circular groove 11 is formed upwards at a bottom of the sealing cover 3; the sealing cover 3 is threadedly connected to the chemical solution holding tool 2; a sealing gasket 12 is provided between the chemical solution holding tool 2 and the sealing cover 3; a sealing bump 13 is provided on a bottom surface of the sealing gasket 12; the sealing bump 13 and the holding through-hole 10 are in an interference fit; and a tapered chamfer 14 is formed at a top of the holding through-hole 10.

The base 1, the chemical solution holding tool 2, and the sealing cover 3 are made of an engineering plastic with a Young's modulus of 2.3 GPa, and an inner side of the base 1, an inner side wall of the holding through-hole, and an inner side of the sealing cover are each coated with a fluorine-containing plastic lining. The sealing gasket 12 and the sealing element 9 are made of a fluororubber, which has a CTE that is three times larger than that of the material of the base 1, the chemical solution holding tool 2, and the sealing cover 3.

Through the combination of the base, the chemical solution holding tool, and the sealing cover, the holding through-hole inside the chemical solution holding tool is sealed. Moreover, a PDC is placed in the first groove, such that only a diamond layer of the PDC is in contact with a cobalt leaching reagent, thereby effectively protecting a metal alloy substrate.

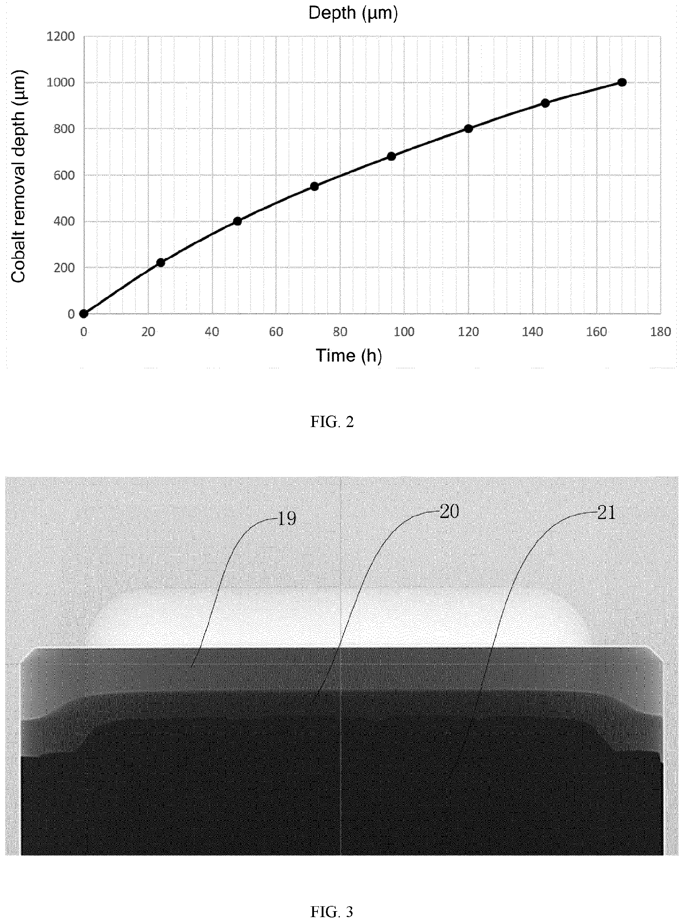

A specific method for leaching cobalt from the PDC is as follows:
A cobalt leaching method includes the following steps:
S1. the PDC is placed in the first groove 5, and then the sealing element 9 is placed in the stepped groove 6;
S2. a torque wrench is used to screw the chemical solution holding tool 2 into the base 1, and the sealing element 9 is compacted;
S3. a syringe is used to inject the cobalt leaching reagent from the top of the holding through-hole 10 with an amount of 2/3 of a volume of the holding through-hole 10, where the cobalt leaching reagent includes, in parts by mass: 36 parts of hydrofluoric acid (HF), 27.2 parts of nitric acid (HNO₃), and 36.8 parts of distilled water (H₂O);
S4. the sealing gasket 12 is placed at a top of the chemical solution holding tool 2, and the sealing cover 3 is tightened to compact the sealing gasket 12;
S5. as shown in FIG. 2, the assembled sealed cobalt leaching device is heated in an oil bath at 170°C for 72 h, such that a thickness of the remaining layer without cobalt leaching 20 in the diamond layer is greater than 300 µm;
S6. the heated sealed cobalt leaching device is taken out and then cooled to room temperature;
S7. the sealing cover 3 is unscrewed and the sealing gasket 12 is removed;
S8. the cobalt leaching reagent in the holding through-hole 10 is pumped out with a liquid pump, then an encapsulation layer is cleaned several times with clean water to remove a residual chemical solution, and the tool is cleaned in an ultrasonic cleaning device;
S9. the chemical solution holding tool 2 is unscrewed, the sealing gasket 12 is removed, and then the cobalt-leached PDC is taken out from the first groove 5, ultrasonically cleaned, and dried; and
S10. a cobalt leaching depth of the diamond layer in the PDC is detected.

The above cobalt leaching method can achieve high-pressure sealing of a cobalt leaching process of the PDC, which can improve a cobalt leaching temperature and a cobalt leaching efficiency, and can also prevent an acid in the cobalt leaching reagent from volatilizing, which may result in polluting the environment, and damaging the human body. Compared with a method of immersing the PDC downwards in the cobalt leaching reagent, pouring the cobalt leaching reagent on the top of the PDC can stabilize the cobalt leaching process to make an obtained cobalt leaching layer 19 more uniform, and can also prevent the cobalt leaching reagent from infiltrating into the metal alloy substrate 21.

### Example 2:

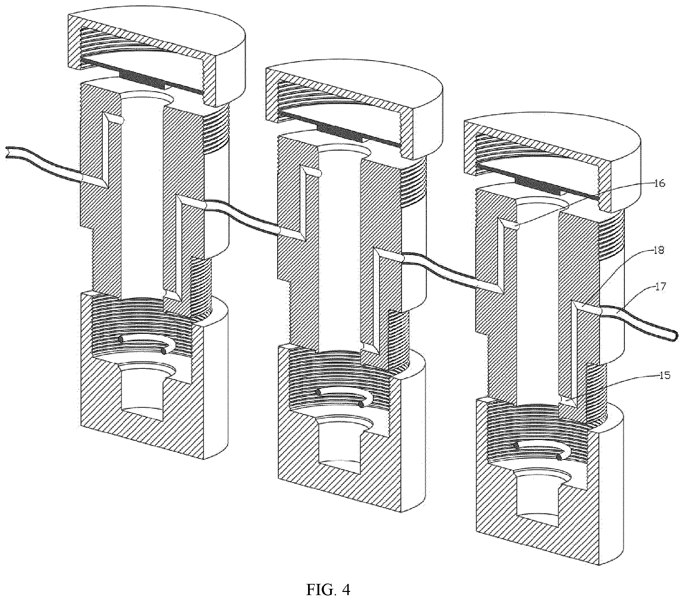

On the basis of Example 1, as shown in FIG. 1 and FIG. 4, a liquid inlet 15 and a liquid outlet 16 are formed on each of inner side walls of three chemical solution holding tools 2; the liquid inlet 15 is formed on a lower part of a right inner side wall of the holding through-hole 10; the liquid outlet 16 is formed on an upper part of the left inner side wall of the holding through-hole 10; a channel 18 is provided inside the chemical solution holding tool 2, such that the liquid inlet 15 and the liquid outlet 16 communicate with the outside, separately; a pipe 17 is provided between two adjacent chemical solution holding tools 2 to connect the three chemical solution holding tools 2 in series and make the three chemical solution holding tools connected to an external liquid circulation device such as a circulating pump through the leftmost pipe 17 and the rightmost pipe 17.

When the device disclosed in Example 2 is in use, compared with Example 1, after the chemical solution holding tool 2 is screwed on the base 1, a liquid inlet 15 of one of two adjacent cobalt leaching devices is connected to a liquid outlet 16 of the other one of the two adjacent cobalt leaching devices through the channel 18 and the pipe 17, and then a liquid inlet 15 of the first cobalt leaching device and a liquid outlet 16 of the last cobalt leaching device are connected to an external liquid circulation system, separately; and during the cobalt leaching process, the circulating pump is used to continuously pump the cobalt leaching reagent in from the right pipe 17 and make it flow into a waste liquid pool from the left pipe 17. However, since the cobalt leaching reagent will react with PDCs from right to left successively, the concentration of the cobalt leaching reagent will gradually decrease.

For a continuous cobalt leaching process in which the circulating pump continuously pumps the cobalt leaching reagent in, the PDC on the right side has higher cobalt leaching efficiency. The more the number of the chemical solution holding tools 2 in series, the greater the difference of the cobalt leaching depth between the first and the last PDC. Therefore, 3 to 5 and preferably 3 chemical solution holding tools are generally connected in series, such that the cobalt leaching depth can be controlled. When the number of the chemical solution holding tools in series is greater than 5, it is necessary to calculate a cobalt leaching rate at different cobalt leaching reagent concentration, and in combination with a cobalt leaching time-depth curve, the PDCs are removed from right to left successively to ensure the uniformity of cobalt leaching depth.

Intermittent cobalt leaching is a more common method, where a circulating pump is used to pump the cobalt leaching reagent into the chemical solution holding tool 2; after a period of cobalt leaching, the circulating pump is turned on once again to completely replace the cobalt leaching reagent in the chemical solution holding tool 2, and then the cobalt leaching is continued; and in this way, the cobalt leaching depth can be controlled to make a cobalt leaching depth of each PDC more uniform.

The liquid inlets 15 and liquid outlets 16 of multiple chemical solution holding tools 2 are connected through liquid-conveying pipes 17 to realize the external recycling of the cobalt leaching reagent, which improves the utilization efficiency of the cobalt leaching reagent and the cobalt leaching efficiency. The cobalt leaching reagent may be injected from the liquid inlet 15 at a lower position and then flow out from the liquid outlet 16 at a higher position, which can reduce a cobalt concentration at a junction between the PDC and the cobalt leaching reagent, thereby improving the mass transfer efficiency and enhancing the cobalt leaching efficiency.

## Claims

1. A sealed cobalt leaching device, comprising a base 1, wherein a top of the base 1 is provided with a first groove 5, a chemical solution holding tool 2 is provided above the base 1, a bottom of the chemical solution holding tool 2 is removably connected to the base 1, a holding through-hole 10 penetrating up and down is formed inside the chemical solution holding tool 2, a sealing cover 3 is provided above the chemical solution holding tool 2, a first circular groove 4 is formed downwards at the top of the base 1, the first groove 5 is provided at a bottom surface of the first circular groove 4, and the bottom of the chemical solution holding tool 2 is connected to the first circular groove 4 through a thread, a clamping groove, a hinge, or an external fixture.

2. The sealed cobalt leaching device according to claim 1, wherein a second circular groove 11 is formed upwards at a bottom of the sealing cover 3, and the sealing cover 3 and the chemical solution holding tool 2 are connected through a thread, a clamping groove, a hinge, or an external fixture.

3. The sealed cobalt leaching device according to claim 1, wherein a second circular groove 11 is formed upwards at a bottom of the sealing cover 3, and the second circular groove 11 is connected to an outer peripheral side of the base 1 through a thread, a clamping groove, a hinge, or an external fixture.

4. The sealed cobalt leaching device according to any one of claims 1 to 3, wherein a sealing gasket 12 is provided between the chemical solution holding tool 2 and the sealing cover 3, a bottom surface of the sealing gasket 12 is provided with a sealing bump 13, the sealing bump 13 and the holding through-hole 10 are in an interference fit, and a tapered chamfer 14 is formed at a top of the holding through-hole 10.

5. The sealed cobalt leaching device according to claim 4, wherein a stepped groove 6 is formed around the first groove 5 on the bottom surface of the first circular groove 4, a bottom surface of the stepped groove 6 is provided with a tapered slope 7, and an included angle between the tapered slope 7 and a vertical direction is 0° to 45°; a bottom surface of the chemical solution holding tool 2 is provided with a protruding pressing block 8, a sealing element 9 is provided inside the stepped groove 6, and a height of the stepped groove 6 is less than or equal to a sum of a height of the sealing element 9 and a height of the protruding pressing block 8 at the bottom of the chemical solution holding tool 2.

6. The sealed cobalt leaching device according to claim 5, wherein a liquid inlet 15 and a liquid outlet 16 are formed on a side wall of the chemical solution holding tool 2, the liquid inlet 15 is formed on a lower part of an inner side wall of the holding through-hole 10, and the liquid outlet 16 is formed on an upper part of the inner side wall of the holding through-hole 10.

7. The sealed cobalt leaching device according to claim 5, wherein the base 1 and the sealing cover 3 are made of an organic material and/or an inorganic material;
the organic material comprises one or more from the group consisting of an engineering plastic, a rubber, a fluorine-containing plastic, and a resin; and
the inorganic material comprises one or more from the group consisting of a metal, a metal oxide or nitride, a non-metal, and a non-metal oxide or nitride;
the chemical solution holding tool is made of an organic material and/or an inorganic material;
the organic material comprises one or more from the group consisting of an engineering plastic, a fluorine-containing plastic, and a resin; and
the inorganic material comprises one or more from the group consisting of a metal, a metal oxide or nitride, a non-metal, and a non-metal oxide or nitride.

8. The sealed cobalt leaching device according to claim 7, wherein a material used for the base 1, the chemical solution holding tool 2, or the sealing cover 3 has a Young's modulus of greater than 2.3 GPa.

9. The sealed cobalt leaching device according to claim 7, wherein an inner wall of the through-hole of the chemical solution holding tool 2 is provided with a corrosion-resistant layer, a material for fabricating the corrosion-resistant layer comprises one or more from the group consisting of a fluorine-containing plastic, a resin, a metal and an oxide or nitride thereof, and a non-metal and an oxide or nitride thereof, and the corrosion-resistant layer is connected to the chemical solution holding tool 2 through a welding, an adhesive connection, a mechanical connection, or a chemical bonding.

10. The sealed cobalt leaching device according to claim 7 or 9, wherein the sealing gasket 12 and the sealing element 9 are made of a corrosion-resistant material; and
the corrosion-resistant material comprises one or more from the group consisting of a fluororubber, an oxyfluoride rubber, a fluorine-containing plastic, and a fluorine-containing resin.

11. The sealed cobalt leaching device according to claim 10, wherein a coefficient of thermal expansion (CTE) of a material of the sealing element 9 or the sealing gasket 12 is both more than three times a maximum CTE of materials of the base 1, the chemical solution holding tool 2, and the sealing cover 3.

12. A cobalt leaching method using the sealed cobalt leaching device according to any one of claims 6, 8, or 11, comprising the following steps:
S1. placing a fixture in the first groove 5, and placing the sealing element 9 in the stepped groove 6;
S2. connecting the chemical solution holding tool 2 and the base 1, and compacting the sealing element 9;
S3. injecting a cobalt leaching reagent;
S4. placing the sealing gasket 12 at a top of the chemical solution holding tool 2, and assembling the sealing cover 3 to compact the sealing gasket 12;
S5. heating the assembled sealed cobalt leaching device at 50°C to 350°C;
S6. taking out the heated sealed cobalt leaching device, and then cooling it to room temperature;
S7. opening the sealing cover 3 and removing the sealing gasket 12;
S8. removing the cobalt leaching reagent, and then cleaning an encapsulation layer several times with clean water to remove a residual reagent;
S9. removing the chemical solution holding tool 2 and the sealing element 9, and then taking a cobalt-leached fixture out from the first groove 5; and
S10. detecting a cobalt leaching depth of the fixture.

13. The cobalt leaching method according to claim 12, wherein in S5, the fixture is a polycrystalline diamond compact (PDC), and a cobalt leaching time is adjusted according to a cobalt leaching time-depth curve, such that a thickness of a layer without cobalt leaching 20 remaining in a diamond layer is greater than 300 µm.

14. The cobalt leaching method according to claim 12, wherein in S3, the cobalt leaching reagent is injected into the holding through-hole 10 from the top thereof.

15. The cobalt leaching method according to claim 12, wherein after S2 and before S3, the cobalt leaching method further comprises the following step:
S2.1. connecting a liquid inlet 15 of one of two adjacent cobalt leaching devices with a liquid outlet 16 of the other one of the two adjacent cobalt leaching devices, and connecting a liquid inlet 15 of the first cobalt leaching device and a liquid outlet 16 of the last cobalt leaching device to an external liquid circulation system, separately.

## Patentansprüche

1. Abgedichtete Cobalt-Laugungsvorrichtung, umfassend eine Basis 1, wobei eine Oberseite der Basis 1 mit einer ersten Nut 5 versehen ist, eine Aufnahmevorrichtung 2 für chemische Lösungen über der Basis 1 vorgesehen ist, ein Boden der Aufnahmevorrichtung 2 für chemische Lösungen abnehmbar mit der Basis 1 verbunden ist, eine Haltedurchbohrung 10, das nach oben und nach unten verläuft, im Inneren der Aufnahmevorrichtung 2 für chemische Lösungen gebildet ist, eine Dichtungsabdeckung 3 über der Aufnahmevorrichtung 2 für chemische Lösungen vorgesehen ist, eine erste kreisförmige Nut 4 abwärts an der Oberseite der Basis 1 gebildet ist, die erste Nut 5 an einer Bodenfläche der ersten kreisförmigen Nut 4 vorgesehen ist und der Boden der Aufnahmevorrichtung 2 für chemische Lösungen über ein Gewinde, eine Klemmnut, ein Gelenk oder eine externe Vorrichtung mit der ersten kreisförmigen Nut 4 verbunden ist.

2. Abgedichtete Cobalt-Laugungsvorrichtung nach Anspruch 1, wobei eine zweite kreisförmige Nut 11 aufwärts an einem Boden der Dichtungsabdeckung 3 gebildet ist und die Dichtungsabdeckung 3 und die Aufnahmevorrichtung 2 für chemische Lösungen über ein Gewinde, eine Klemmnut, ein Gelenk oder eine externe Vorrichtung verbunden sind.

3. Abgedichtete Cobalt-Laugungsvorrichtung nach Anspruch 1, wobei eine zweite kreisförmige Nut 11 aufwärts an einem Boden der Dichtungsabdeckung 3 gebildet ist und die zweite kreisförmige Nut 11 über ein Gewinde, eine Klemmnut, ein Gelenk oder eine externe Vorrichtung mit einer Außenumfangsseite der Basis 1 verbunden ist.

4. Abgedichtete Cobalt-Laugungsvorrichtung nach einem der Ansprüche 1 bis 3, wobei eine Dichtung 12 zwischen der Aufnahmevorrichtung 2 für chemische Lösungen und der Dichtungsabdeckung 3 vorgesehen ist, eine Bodenfläche der Dichtung 12 mit einem Dichtungshöcker 13 versehen ist, sich der Dichtungshöcker 13 und die Haltedurchbohrung 10 in einer Presspassung befinden und an einer Oberseite der Haltedurchbohrung 10 eine sich verjüngende Abschrägung 14 gebildet ist.

5. Abgedichtete Cobalt-Laugungsvorrichtung nach Anspruch 4, wobei eine abgestufte Nut 6 um die erste Nut 5 an der Bodenfläche der ersten kreisförmigen Nut 4 gebildet ist, eine Bodenfläche der abgestuften Nut 6 mit einer sich verjüngenden Schräge 7 versehen ist und ein eingeschlossener Winkel zwischen der sich verjüngenden Schräge 7 und einer vertikalen Richtung 0° bis 45° beträgt; eine Bodenfläche der Aufnahmevorrichtung 2 für chemische Lösungen mit einem vorstehenden Pressblock 8 versehen ist, ein Dichtelement 9 im Inneren der abgestuften Nut 6 vorgesehen ist und eine Höhe der abgestuften Nut 6 geringer als oder gleich einer Summe einer Höhe des Dichtelements 9 und einer Höhe des vorstehenden Pressblocks 8 am Boden der Aufnahmevorrichtung 2 für chemische Lösungen ist.

6. Abgedichtete Cobalt-Laugungsvorrichtung nach Anspruch 5, wobei ein Flüssigkeitseinlass 15 und ein Flüssigkeitsauslass 16 an einer Seitenwand der Aufnahmevorrichtung 2 für chemische Lösungen gebildet sind, der Flüssigkeitseinlass 15 an einem unteren Teil einer inneren Seitenwand der Haltedurchbohrung 10 gebildet ist und der Flüssigkeitsauslass 16 an einem oberen Teil der inneren Seitenwand der Haltedurchbohrung 10 gebildet ist.

7. Abgedichtete Cobalt-Laugungsvorrichtung nach Anspruch 5, wobei die Basis 1 und die Dichtungsabdeckung 3 aus einem organischen Material und/oder einem anorganischen Material gefertigt sind;
wobei das organische Material eines oder mehrere aus der Gruppe umfasst, die aus einem technischen Kunststoff, einem Kautschuk, einem fluorhaltigen Kunststoff und einem Harz besteht; und
das anorganische Material eines oder mehrere aus der Gruppe umfasst, die aus einem Metall, einem Metalloxid oder -nitrid, einem Nichtmetall und einem Nichtmetalloxid oder -nitrid besteht;
die Aufnahmevorrichtung für chemische Lösungen aus einem organischen Material und/oder einem anorganischen Material gefertigt ist;
wobei das organische Material eines oder mehrere aus der Gruppe umfasst, die aus einem technischen Kunststoff, einem fluorhaltigen Kunststoff und einem Harz besteht; und
das anorganische Material eines oder mehrere aus der Gruppe umfasst, die aus einem Metall, einem Metalloxid oder -nitrid, einem Nichtmetall und einem Nichtmetalloxid oder -nitrid besteht.

8. Abgedichtete Cobalt-Laugungsvorrichtung nach Anspruch 7, wobei ein Material, das für die Basis 1, die Aufnahmevorrichtung 2 für chemische Lösungen oder die Dichtungsabdeckung 3 verwendet wird, einen Youngschen Modul über 2,3 GPa aufweist.

9. Abgedichtete Cobalt-Laugungsvorrichtung nach Anspruch 7, wobei eine Innenwand der Durchbohrung der Aufnahmevorrichtung 2 für chemische Lösungen mit einer korrosionsbeständigen Schicht versehen ist, ein Material zum Herstellen der korrosionsbeständigen Schicht eines oder mehrere aus der Gruppe umfasst, die aus einem fluorhaltigen Kunststoff, einem Harz, einem Metall und einem Oxid oder Nitrid, einem Nichtmetall und einem Oxid oder Nitrid davon besteht, und die korrosionsbeständige Schicht mit der Aufnahmevorrichtung 2 für chemische Lösungen über eine Schweißung, eine Klebeverbindung, eine mechanische Verbindung oder chemisches Bonden verbunden ist.

10. Abgedichtete Cobalt-Laugungsvorrichtung nach Anspruch 7 oder 9, wobei die Dichtung 12 und das Dichtelement 9 aus einem korrosionsbeständigen Material gefertigt sind; und
wobei das korrosionsbeständige Material eines oder mehrere aus der Gruppe umfasst, die aus einem Fluorkautschuk, einem Oxyfluorid-Kautschuk, einem fluorhaltigen Kunststoff und einem fluorhaltigen Harz besteht.

11. Abgedichtete Cobalt-Laugungsvorrichtung nach Anspruch 10, wobei ein Wärmeausdehnungskoeffizient (CTE) eines Materials des Dichtelements 9 oder der Dichtung 12 sowohl mehr als das Dreifache eines maximalen CTE der Materialien der Basis 1, der Aufnahmevorrichtung 2 für chemische Lösungen und der Dichtungsabdeckung 3 ist.

12. Cobalt-Laugungsverfahren unter Verwendung der abgedichteten Cobalt-Laugungsvorrichtung nach nach einem der Ansprüche 6, 8 oder 11, das die folgenden Schritte umfasst:
S1. Platzieren einer Vorrichtung in die erste Nut 5 und Platzieren des Dichtelements 9 in die abgestufte Nut 6;
S2. Verbinden der Aufnahmevorrichtung 2 für chemische Lösungen und der Basis 1 und Zusammendrücken des Dichtelements 9;
S3. Einspritzen eines Cobaltauslaugungsreagens;
S4. Platzieren der Dichtung 12 auf einer Oberseite der Aufnahmevorrichtung 2 für chemische Lösungen und Zusammensetzen der Dichtungsabdeckung 3, um die Dichtung 12 zusammenzudrücken;
S5. Erwärmen der zusammengesetzten abgedichteten Cobalt-Laugungsvorrichtung bei 50 °C bis 350 °C;
S6. Herausnehmen der erwärmten abgedichteten Cobalt-Laugungsvorrichtung und danach Abkühlen auf Zimmertemperatur;
S7. Öffnen der Dichtungsabdeckung 3 und Entfernen der Dichtung 12;
S8. Entfernen des Cobaltauslaugungsreagens und danach mehrfaches Reinigen einer Verkapselungsschicht mit reinem Wasser, um einen Reagensrückstand zu entfernen;
S9. Entfernen der Aufnahmevorrichtung 2 für chemische Lösungen und des Dichtelements 9 und danach Herausnehmen einer Cobalt-ausgelaugten Vorrichtung aus der ersten Nut 5; und
S10. Erkennen einer Cobaltlaugungstiefe der Vorrichtung.

13. Cobalt-Laugungsverfahren nach Anspruch 12, wobei die Vorrichtung in S5 ein Polycrystalline-Diamond-Compact (PDC) ist und eine Cobalt-Laugungszeit in Übereinstimmung mit einer Cobalt-Laugungszeit-Tiefen-Kurve angepasst wird, sodass eine Dicke einer Schicht ohne Cobaltlaugung 20, die in einer Diamantschicht verbleibt, größer als 300 µm ist.

14. Cobalt-Laugungsverfahren nach Anspruch 12, wobei das Cobaltauslaugungsreagens in S3 in die Haltedurchbohrung 10 von deren Oberseite eingespritzt wird.

15. Cobalt-Laugungsverfahren nach Anspruch 12, wobei das Cobalt-Laugungsverfahren nach S2 und vor S3 ferner den folgenden Schritt umfasst:
S2.1 Verbinden eines Flüssigkeitseinlasses 15 von einer von zwei benachbarten Cobalt-Laugungsvorrichtungen mit einem Flüssigkeitsauslass 16 der anderen der zwei benachbarten Cobalt-Laugungsvorrichtungen und getrenntes Verbinden eines Flüssigkeitseinlasses 15 der ersten Cobalt-Laugungsvorrichtung und eines Flüssigkeitsauslasses 16 der letzten Cobalt-Laugungsvorrichtung mit einem externen Flüssigkeitszirkulationssystem.

## Revendications

1. Dispositif de lixiviation de cobalt scellé, comprenant une base 1, dans lequel un dessus de la base 1 est pourvu d'une première rainure 5, un outil de maintien de solution chimique 2 est prévu au-dessus de la base 1, un fond de l'outil de maintien de solution chimique 2 est connecté de manière amovible à la base 1, un orifice traversant de maintien 10 pénétrant vers le haut et le bas est formé à l'intérieur de l'outil de maintien de solution chimique 2, un recouvrement d'étanchéité 3 est prévu au-dessus de l'outil de maintien de solution chimique 2, une première rainure circulaire 4 est formée vers le bas au niveau du dessus de la base 1, la première rainure 5 est prévue au niveau d'une surface inférieure de la première rainure circulaire 4, et le fond de l'outil de maintien de solution chimique 2 est connecté à la première rainure circulaire 4 par un filet, une rainure de serrage, une charnière ou un dispositif de fixation externe.

2. Dispositif de lixiviation de cobalt scellé selon la revendication 1, dans lequel une seconde rainure circulaire 11 est formée vers le haut au niveau d'un fond du recouvrement d'étanchéité 3, et le recouvrement d'étanchéité 3 et l'outil de maintien de solution chimique 2 sont connectés par un filet, une rainure de serrage, une charnière ou un dispositif de fixation externe.

3. Dispositif de lixiviation de cobalt scellé selon la revendication 1, dans lequel une seconde rainure circulaire 11 est formée vers le haut au niveau d'un fond du recouvrement d'étanchéité 3, et la seconde rainure circulaire 11 est connectée à un côté périphérique externe de la base 1 par un filet, une rainure de serrage, une charnière ou un dispositif de fixation externe.

4. Dispositif de lixiviation de cobalt scellé selon l'une quelconque des revendications 1 à 3, dans lequel un joint d'étanchéité 12 est prévu entre l'outil de maintien de solution chimique 2 et le recouvrement d'étanchéité 3, une surface inférieure du joint d'étanchéité 12 est pourvue d'une bosse d'étanchéité 13, la bosse d'étanchéité 13 et l'orifice traversant de maintien 10 sont dans un ajustement avec serrage, et un chanfrein effilé 14 est formé au niveau d'un dessus de l'orifice traversant de maintien 10.

5. Dispositif de lixiviation de cobalt scellé selon la revendication 4, dans lequel une rainure étagée 6 est formée autour de la première rainure 5 sur la surface inférieure de la première rainure circulaire 4, une surface inférieure de la rainure étagée 6 est pourvue d'une pente effilée 7, et un angle inclus entre la pente effilée 7 et une direction verticale est de 0° à 45° ; une surface inférieure de l'outil de maintien de solution chimique 2 est pourvue d'un bloc de pression saillant 8, un élément d'étanchéité 9 est prévu à l'intérieur de la rainure étagée 6, et une hauteur de la rainure étagée 6 est inférieure ou égale à une somme d'une hauteur de l'élément d'étanchéité 9 et d'une hauteur du bloc de pression saillant 8 au fond de l'outil de maintien de solution chimique 2.

6. Dispositif de lixiviation de cobalt scellé selon la revendication 5, dans lequel une entrée de liquide 15 et une sortie de liquide 16 sont formées sur une paroi latérale de l'outil de maintien de solution chimique 2, l'entrée de liquide 15 est formée sur une partie inférieure d'une paroi latérale interne de l'orifice traversant de maintien 10, et la sortie de liquide 16 est formée sur une partie supérieure de la paroi latérale interne de l'orifice traversant de maintien 10.

7. Dispositif de lixiviation de cobalt scellé selon la revendication 5, dans lequel la base 1 et le recouvrement d'étanchéité 3 sont réalisés en un matériau organique et/ou un matériau inorganique ;
le matériau organique comprend un ou plusieurs éléments parmi le groupe constitué de matières plastiques d'ingénierie, d'un caoutchouc, d'un plastique contenant du fluor et d'une résine ; et
le matériau inorganique comprend un ou plusieurs éléments parmi le groupe constitué d'un métal, d'un oxyde ou nitrure métallique, d'un non métal, et d'un oxyde ou nitrure non métallique ;
l'outil de maintien de solution chimique est réalisé en un matériau organique et/ou un matériau inorganique ;
le matériau organique comprend un ou plusieurs éléments parmi le groupe constitué de matières plastiques d'ingénierie, d'un plastique contenant du fluor et d'une résine ; et
le matériau inorganique comprend un ou plusieurs éléments parmi le groupe constitué d'un métal, d'un oxyde ou nitrure métallique, d'un non métal, et d'un oxyde ou nitrure non métallique.

8. Dispositif de lixiviation de cobalt scellé selon la revendication 7, dans lequel un matériau utilisé pour la base 1, l'outil de maintien de solution chimique 2 ou le recouvrement d'étanchéité 3 a un module de Young supérieur à 2,3 GPa.

9. Dispositif de lixiviation de cobalt scellé selon la revendication 7, dans lequel une paroi interne de l'orifice traversant de l'outil de maintien de solution chimique 2 est pourvue d'une couche résistant à la corrosion, un matériau pour fabriquer la couche résistant à la corrosion comprend un ou plusieurs éléments parmi le groupe constitué d'un plastique contenant du fluor, d'une résine, d'un métal et d'un oxyde ou nitrure de celui-ci, et d'un non métal et d'un oxyde ou nitrure de celui-ci, et la couche résistant à la corrosion est connectée à l'outil de maintien de solution chimique 2 par une soudure, une connexion adhésive, une connexion mécanique ou une liaison chimique.

10. Dispositif de lixiviation de cobalt scellé selon la revendication 7 ou 9, dans lequel le joint d'étanchéité 12 et l'élément d'étanchéité 9 sont réalisés en un matériau résistant à la corrosion ; et
le matériau résistant à la corrosion comprend un ou plusieurs éléments parmi le groupe constitué d'un caoutchouc fluoré, d'un caoutchouc d'oxyfluorure, d'un plastique contenant du fluor et d'une résine contenant du fluor.

11. Dispositif de lixiviation de cobalt scellé selon la revendication 10, dans lequel un coefficient de dilatation thermique (CDT) d'un matériau de l'élément d'étanchéité 9 ou du joint d'étanchéité 12 est à la fois plus de trois fois un CDT maximal de matériaux de la base 1, de l'outil de maintien de solution chimique 2 et du recouvrement d'étanchéité 3.

12. Procédé de lixiviation de cobalt utilisant le dispositif de lixiviation de cobalt scellé selon l'une quelconque des revendications 6, 8 ou 11, comprenant les étapes suivantes :
S1. placer un dispositif de fixation dans la première rainure 5, et placer l'élément d'étanchéité 9 dans la rainure étagée 6 ;
S2. connecter l'outil de maintien de solution chimique 2 et la base 1, et compacter l'élément d'étanchéité 9 ;
S3. injecter un réactif de lixiviation de cobalt ;
S4. placer le joint d'étanchéité 12 au niveau d'un dessus de l'outil de maintien de solution chimique 2, et assembler le recouvrement d'étanchéité 3 pour compacter le joint d'étanchéité 12 ;
S5. chauffer le dispositif de lixiviation de cobalt scellé assemblé à 50°C à 350 °C ;
S6. prélever le dispositif de lixiviation de cobalt scellé chauffé, puis le refroidir à température ambiante ;
S7. ouvrir le recouvrement d'étanchéité 3 et retirer le joint d'étanchéité 12 ;
S8. éliminer le réactif de lixiviation de cobalt, puis nettoyer une couche d'encapsulation plusieurs fois à l'eau propre pour éliminer un réactif résiduel ;
S9. retirer l'outil de maintien de solution chimique 2 et l'élément d'étanchéité 9, puis prélever un dispositif de fixation à cobalt lixivié de la première rainure 5 ; et
S10. détecter une profondeur de lixiviation de cobalt du dispositif de fixation.

13. Procédé de lixiviation de cobalt selon la revendication 12, dans lequel dans S5, le dispositif de fixation est un compact de diamant polycristallin (PDC), et une durée de lixiviation de cobalt est ajustée en fonction d'une courbe de temps-profondeur de lixiviation de cobalt de sorte qu'une épaisseur d'une couche sans lixiviation de cobalt 20 restant dans une couche de diamant est supérieure à 300 µm.

14. Procédé de lixiviation de cobalt selon la revendication 12, dans lequel dans S3, le réactif de lixiviation de cobalt est injecté dans l'orifice traversant de maintien 10 depuis le dessus de celui-ci.

15. Procédé de lixiviation de cobalt selon la revendication 12, dans lequel après S2 et avant S3, le procédé de lixiviation de cobalt comprend en outre l'étape suivante :
S2.1. connecter une entrée de liquide 15 d'un de deux dispositifs de lixiviation de cobalt adjacents à une sortie de liquide 16 de l'autre des deux dispositifs de lixiviation de cobalt adjacents, et connecter une entrée de liquide 15 du premier dispositif de lixiviation de cobalt et une sortie de liquide 16 du dernier dispositif de lixiviation de cobalt à un système de circulation de liquide externe, séparément.
